# EUROPEAN PATENT SPECIFICATION

(11) **EP 3 456 022 B1**
(45) Date of publication and mention of the grant of the patent: **26.07.2023**
(21) Application number: 17721637.1
(22) Date of filing: 03.05.2017
(51) Int. Cl.: H04L 65/1069

(54) **METHOD, SYSTEM, COMPUTER PROGRAM AND COMPUTER READABLE STORAGE MEDIUM FOR IMPROVED HANDLING OF AN IP MULTMEDIA SUBSYSTEM, IMS, CONVERSATIONAL SERVICE FOR A USER EQUIPMENT**
VERFAHREN, SYSTEM, COMPUTERPROGRAMM UND COMPUTERLESBARES SPEICHERMEDIUM ZUR VERBESSERTEN HANDHABUNG EINES IP-MULTIMEDIA-SUBSYSTEMS, IMS, GESPRÄCHSDIENST FÜR EIN BENUTZERGERÄT
PROCÉDÉ, SYSTÈME, PROGRAMME D'ORDINATEUR ET SUPPORT DE STOCKAGE LISIBLE PAR ORDINATEUR POUR LA MANIPULATION AMÉLIORÉE D'UN SOUS-SYSTÈME IP MULTIMEDIA, IMS, SERVICE CONVERSATIONNEL D' UN ÉQUIPEMENT D'UTILISATEUR

(30) Priority: 13.05.2016 EP 16169631
(43) Date of publication of application: 20.03.2019
(73) Proprietor: Deutsche Telekom AG, 53113 Bonn (DE)
(72) Inventor: LAUSTER, Reinhard, 3100 St. Pölten (AT); ALEKSIEV, Vasil, 1220 Wien (AT)
(74) Representative: Schwöbel, Thilo K.
(86) International application number: PCT/EP2017/060518
(87) International publication number: WO 2017/194365

(56) References cited:
- WO-A1-2006/014090
- WO-A1-2007/079578
- US-A1- 2005 265 382
- "3rd Generation Partnership Project; Technical Specification Group Core Network and Terminals; IP multimedia call control protocol based on Session Initiation Protocol (SIP) and Session Description Protocol (SDP); Stage 3 (Release 13)", 3GPP STANDARD; 3GPP TS 24.229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V13.5.1, 22 March 2016 (2016-03-22), pages 1-920, XP051088328,

## Description

### BACKGROUND

The present invention relates a method for an improved handling of an IMS (Internet Multimedia Subsystem) conversational service of a user equipment being connected to a telecommunications network comprising or being associated to an IMS network, wherein the user equipment applies a request timer information, related to a request timeout time interval, when attempting to initiate the IMS conversational service.

Furthermore, the present invention relates to a system for improved handling of an IMS conversational service of a user equipment being connected to a telecommunications network, the system comprising the telecommunications network and the user equipment, wherein the user equipment applies a request timer information by means of attempting to initiate the IMS conversational service while a request timeout time interval, relating to the request timer information, has not expired.

Additionally, the present invention relates to telecommunications network and to a user equipment, both being part of the inventive system, and to a program and a computer program product causing to perform an inventive method.

In known implementations of telecommunications networks, especially in mobile communication networks, IMS services involving the use of SIP (Session Initiation Protocol) functionalities typically apply SIP related timers such as specified in 3GPP TS 24.229 (Rel.13 version 13.5.1) clause 7.7, which are used for SIP session and SIP transaction timeout control. This typically means, e.g. for the so-called B timer, that this timer (i.e. the time interval related to that timer) is 64 times another timer (called T1) which is defined to correspond to 2 seconds (i.e. the time interval corresponding to the T1 timer is set to be 2 seconds for the user equipment), which means effectively, that the so-called B timer (i.e. the related time interval) corresponds to 128 seconds. As in conventional implementations this B timer is typically used for SIP session and SIP transaction timeout control, this results in a session timeout of more than 2 minutes which, for conversational services, does typically not correspond to an acceptable user experience. However, as every telecommunications network is different (due to different network architecture, different network nodes and a different geographical redundancy), the request timeout time intervals to be applied should be adapted to the specific situation considered.

Document WO 2007/079578 A1, teaches a mobile device which sends a registration request to a network node, either using CS or IMS-SIP signalling. The mobile device starts a timer which determines the maximum waiting time for a response to the registration request. The value of the timer is configurable and can be remotely configured OTA (over the air).

Document WO 2006/014090 A1, teaches a system in which a PTT client uses timers for all the talk burst messages it sends to the server. If the timer times out without any response having been received, the talk burst may be resent. The value of the timers is determined by a PTT server based on a number of parameters including QoE, RF conditions, etc.

3GPP non-patent publication titled, "3rd Generation Partnership Project; Technical Specification Group Core Network and Terminals; IP multimedia call control protocol based on Session Initiation Protocol (SIP) and Session Description Protocol (SDP); Stage 3 (Release 13)", 3GPP STANDARD; 3GPP TS 24.229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V13.5.1 , 22 March 2016 (2016-03-22), pages 1-920, discloses, amongst others, the use of timers in SIP signaling.

Document US 2005/265382 A1 discloses an IMS environment in which timers are used by UE devices and the different IMS nodes in order to control the different SIP transactions, e.g. registrations, session establishments etc. The document also discloses that the timer values can be sent to the UE devices from the network.

### SUMMARY

The invention is defined by a method according to independent claim 1, a system according to independent claim 6, a program comprising computer readable code according to independent claim 10 and a computer readable storage medium according to independent claim 11.

Further embodiments are set out in the dependent claims.

An object of the present invention is to provide an effective and simple solution to apply session timeout timers that are as much as possible adapted to the telecommunications network (or the plurality of telecommunications networks involved - e.g. of the caller and the callee) used and/or adapted to the situation of the user of that telecommunications network, in order to both enhance the user experience, the ease of use for providing communication services to the user, and especially a faster establishment of communication links or communication sessions, as well as avoid unnecessary network load.

The object of the present invention is achieved by a method for improved handling of an IMS (Internet Multimedia Subsystem) conversational service of a user equipment being connected to a telecommunications network comprising or being associated to an IMS network,
) wherein the user equipment applies a request timer information, related to a request timeout time interval, when attempting to initiate the IMS conversational service, wherein the request timeout time interval is started upon the initiation of the IMS conversational service, wherein the method comprises the following steps:
-- in a first step, the user equipment attempts to SIP (Session Initiation Protocol) register towards the telecommunications network or the IMS network,
-- in a second step, subsequent to the first step, the user equipment attempts to initiate the IMS conversational service, and
wherein the request timer information, related to the request timeout time interval to be applied by the user equipment for the IMS conversational service, is transmitted, by the ) telecommunications network, to the user equipment either during the first step and/or during the second step, wherein the IMS conversational service is attempted to be initiated while the request timeout time interval has not expired.

According to the present invention, the request timer information is transmitted to the user equipment in connection to the communication session during which the IMS conversational service is requested. It is thereby advantageously possible according to the present invention to help to improve customer satisfaction and user experience of a user of the inventive telecommunications network by means of having these timers (i.e. the request timeout time interval corresponding to the request timer information) configured in a manner suitable to the specific current communication situation of the user equipment.

By means of transmitting the request timer information - related to the request timeout time interval (to be applied by the user equipment for the IMS conversational service, is transmitted) -, by the telecommunications network, to the user equipment either during the first step (during which the user equipment attempts to SIP (Session Initiation Protocol) register towards the telecommunications network or the IMS network) and/or during the second step (during which the user equipment attempts to initiate the IMS conversational service), it is advantageously possible according to the present invention that a context information is available to the telecommunications network (relating to the context or the situation of the user equipment currently transmitting the request) such that the request timer information can be transmitted to the user equipment that is most suited to the current context or situation of the user equipment.

As every telecommunications network is different, when configuring the telecommunications network, it is required to define different timers (i.e. time intervals) to be applied by the different network nodes as well as by the user equipments involved, in order to deal with time delays related to the network nodes of the telecommunications network and/or related to the distances between the network nodes. Hence, providing the possibility according to the present invention, to define or configure the request timeout timers or request timeout time intervals by means of being able to transmit the corresponding request timer information as best suited to the situation or context of the user equipment, it is advantageously possible to give the possibility (to the network operator of the telecommunications network) to alter the behavior of the user equipments according to the specific current situation of the telecommunications network involved. This allows to adapt the behavior, i.e. the responses, of the individual user equipments within the telecommunications network more appropriately in view of the network architecture specifics (especially regarding data transport and transport redundancy) of the telecommunications network considered; e.g. in some situations (or parts of the telecommunications network) a longer time for a response of the SIP request (i.e. the SIP registration request or the SIP invite request of the user equipment) - hence the corresponding request timeout time interval to be applied in that telecommunications network should be set to a longer time interval, thereby only slightly reducing user experience but avoiding excessively high rates of aborted or unsuccessful SIP requests - could be appropriate, whereas in other situations (or parts of the telecommunications network) shorter times (hence providing the possibility to set the corresponding request timeout time interval to be applied in that (different) telecommunications network to a shorter time interval, thereby improving user experience) could be feasible.

Furthermore according to an advantageous embodiment of the present invention, - during the first step - the user equipment attempts to SIP register towards the telecommunications network or the IMS network by transmitting a SIP register message to a network node of the IMS network of the telecommunications network.

By means of transmitting the request timer information during the first step, it is advantageously possible that the user equipment already knows the request timeout time interval to apply (when actually initiating the IMS conversational service) while performing the registration step (i.e. sometime "long" before actually initiating the conversational service (e.g. placing a call) by means of transmitting the SIP invite message.

Furthermore according to an advantageous embodiment of the present invention, - during the second step - the request timeout time interval is started upon the user equipment transmitting or attempting to transmit - in view of initiating the IMS conversational service - a SIP invite message to a network node of the IMS network of the telecommunications network.

By means of transmitting the request timer information during the second step, it is advantageously possible that the telecommunications network very precisely knows the situation of the user equipment, and is, thus, able to provide (and transmit) the request timer information accordingly such that the request timeout time interval to apply is best suited to that situation.

According to a further embodiment of the present invention, it is advantageously possible that the request timeout time interval related to the request timer information is dependent on at least one out of the following:
-- the radio access of the user equipment towards the telecommunications network when attempting to initiate the IMS conversational service,
-- the kind of radio service requested by the user equipment,
-- the kind of IMS conversational service,
-- the kind of interconnection scenario of the user equipment towards the telecommunications network,
-- the capabilities of the user equipment.

By means of adjusting the request timeout time interval dependent on different parameters, it is advantageously possible to adapt the request timer information (and hence the request timeout time interval to apply) in the most suitable manner.

According to a further embodiment of the present invention, it is also advantageously possible that the IMS conversational service corresponds to a voice call service or to a video call service or to a push-to-talk service or to an emergency call service.

Furthermore, the present invention relates to a system for improved handling of an IMS (Internet Multimedia Subsystem) conversational service of a user equipment being connected to a telecommunications network, wherein the system comprises the telecommunications network and the user equipment, wherein the telecommunications network comprises or is associated to an IMS network, wherein the user equipment applies a request timeout time interval, related to a request timer information, when attempting to initiate the IMS conversational service, wherein the request timeout time interval is started upon the initiation of the IMS conversational service, wherein the system is configured such that:
-- the user equipment attempts to SIP (Session Initiation Protocol) register towards the telecommunications network or the IMS network,
-- the user equipment then attempts to initiate the IMS conversational service,
wherein the request timer information, related to the request timeout time interval to be applied by the user equipment for the IMS conversational service is transmitted, by the telecommunications network, to the user equipment either during the first step or during the second step, wherein the IMS conversational service is attempted to be initiated while the request timeout time interval has not expired.

Thereby, it is advantageously possible to provide a system such that customer satisfaction and user experience of a user of the inventive telecommunications network is improved by means of having timeout timers (i.e. the request timeout time interval corresponding to the request timer information) configurable by the network operator, especially for each device or user equipment used in the telecommunications network and for each event of an initiation of an IMS conversational service by a user equipment.

Advantageously, it is especially possible according to the present invention, that the system is furthermore configured such that the request timeout time interval is started upon the user equipment transmitting or attempting to transmit - in view of initiating the IMS conversational service - a SIP invite message to a network node of the IMS network of the telecommunications network.

Furthermore advantageously, the request timeout time interval related to the request timer information is dependent on at least one out of the following:
-- the radio access of the user equipment towards the telecommunications network when attempting to initiate the IMS conversational service,
-- the kind of radio service requested by the user equipment,
-- the kind of IMS conversational service,
-- the kind of interconnection scenario of the user equipment towards the telecommunications network,
-- the capabilities of the user equipment.

Furthermore, the present invention relates to a telecommunications network for improved handling of an IMS (Internet Multimedia Subsystem) conversational service of a user equipment, the telecommunications network being part of an inventive system.

Furthermore, the present invention relates to a user equipment for improved handling of an IMS (Internet Multimedia Subsystem) conversational service to a telecommunications network, the user equipment being part of an inventive system.

Additionally, the present invention relates to a program comprising a computer readable program code which, when executed on a computer or on a network node of a telecommunications network or on a user equipment or in part on the network node of a telecommunications network and in part on the user equipment, causes the computer or the network node of the telecommunications network or the user equipment to perform the inventive method.

Still additionally, the present invention relates to a computer program product for improved handling of an IMS (Internet Multimedia Subsystem) conversational service of a user equipment being connected to a telecommunications network comprising or being associated to an IMS network, the computer program product comprising a computer program stored on a storage medium, the computer program comprising program code which, when executed a computer or on a network node of a telecommunications network or on a user equipment or in part on the network node of a telecommunications network and in part on the user equipment, causes the computer or the network node of the telecommunications network or the user equipment to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention, which is only defined by the appended claims. The reference figures quoted below refer to the attached drawings.

### BRIEF DESCRIPTION OF THE DRAWINGS

**Figure 1** schematically illustrate a mobile communication network as an example of an inventive telecommunications network, comprising or being associated to an IMS network.
**Figure 2** schematically illustrates a communication diagram related to the inventive method.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

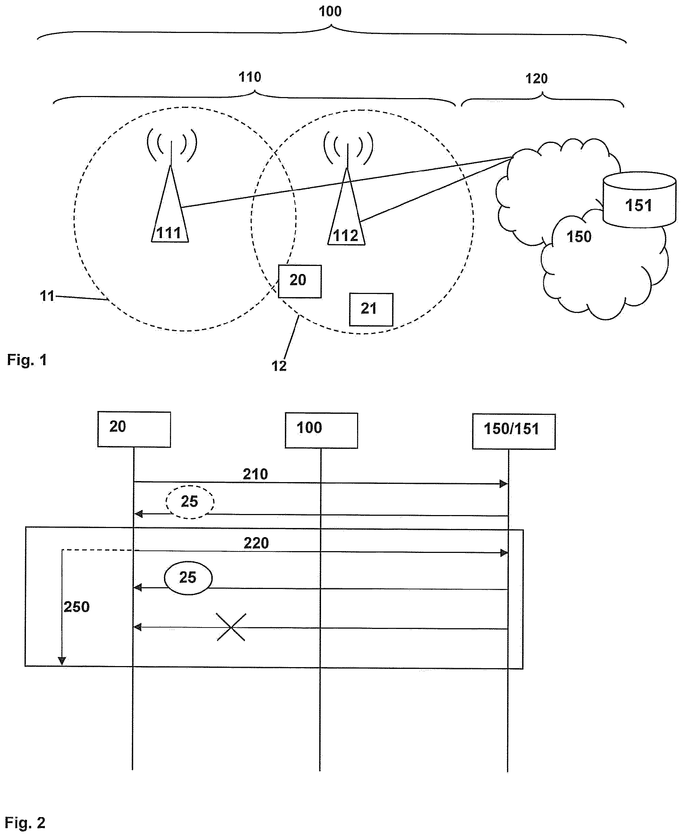

In Figure 1, a mobile communication network 100 as an example of an inventive telecommunications network 100 is schematically shown. The telecommunications network 100 comprises or is associated to an IMS network 150. In the exemplary embodiment of Figure 1, the telecommunications network 100 is realized as a cellular mobile communication network 100, comprising an access network 110 and a core network 120. Furthermore in the exemplary embodiment of Figure 1, the access network 110 comprises a first radio cell 11 and a second radio cell 12. A first base station entity 111 serves the first radio cell 11, and a second base station entity 112 serves the second radio cell 12. Of course, typically, a mobile communication network comprises a certain number of radio cells, typically far exceeding two radio cells. Instead of realizing the telecommunications network 100 as a mobile communication network 100, it is also possible according to the present invention (but not shown in Figure 1) that the telecommunications network 100 is realized as a fixed line telecommunications network 100. Also in the latter case, the telecommunications network 100 typically comprises an access network (not shown) and a core network similar to the core network 120 of the mobile communication network 100 as schematically shown in Figure 1.

The telecommunications network 100 comprises, especially as part of its core network 120, or, at least, accessible by the core network 120 of the telecommunications network 100, an IMS network 150. The IMS network 150 typically comprises a plurality of network nodes, one of which being designated by reference sign 151 in Figure 1.

Furthermore, the telecommunications network 100 typically comprises (or is associated with) a plurality of user equipments, one of which is designated in Figure 1 by reference sign 20, a further user equipment is designated by reference sign 21 (alternatively, one could speak of the first user equipment 20 and a further or second user equipment 21).

According to the present invention, an improved method of handling an IMS (Internet Multimedia Subsystem) conversational service is proposed. The method assumes that a user equipment 20 is connected to the telecommunications network 100 that comprises (or is associated) to the IMS network 150 (comprising (at least) the (IMS) network node 151). This is schematically shown by means of the communication diagram of Figure 2, schematically showing the communication between the user equipment 20, the telecommunications network 100, and the IMS network 150/network node 151.

According to the present invention, it is assumed that - in a first step - the user equipment 20 attempts to SIP (Session Initiation Protocol) register towards the telecommunications network 100 or the IMS network 150 which is represented in Figure 2 by means of an arrow from the user equipment 20 towards the IMS network 150/the IMS network node 151 (that could also be represented by an analogous arrow from the user equipment 20 to the telecommunications network 100) and reference sign 210. According to a first alternative according to the present invention, as at least one result of the SIP register message 210 (or SIP registration message 210), the IMS network 150/the IMS network node 151 transmits the request timer information 25 to the user equipment 20 (or the telecommunications network 100 transmits the request timer information 25 to the user equipment 20); this is represented in Figure 2 by means of reference sign 25 being encircled by a dashed line. The first step, hence the SIP registration of the user equipment 20, can occur either directly prior to the second step (which corresponds to the user equipment 20 transmitting a SIP invite message 220 to the IMS network 150/the IMS network node 151 or to the telecommunications network 100), or it can occur a considerable time (or many minutes or even many hours if not many days) prior to the second step.

According to the present invention, it is furthermore assumed that - in the second step - the user equipment 20 attempts to transmit a SIP (Session Initiation Protocol) invite message 220 towards the telecommunications network 100 or the IMS network 150 which is represented in Figure 2 by means of an arrow from the user equipment 20 towards the IMS network 150/the IMS network node 151 (that could also be represented by an analogous arrow from the user equipment 20 to the telecommunications network 100) and reference sign 220. According to a second alternative according to the present invention, as at least one result of the SIP invite message 220, the IMS network 150/the IMS network node 151 transmits the request timer information 25 to the user equipment 20 (or the telecommunications network 100 transmits the request timer information 25 to the user equipment 20); this is represented in Figure 2 by means of reference sign 25 being encircled by a drawn-through line.

According to the present invention, the request timer information 25, related to the request timeout time interval 250 to be applied by the user equipment 20 for the IMS conversational service, is transmitted, by the telecommunications network 100, to the user equipment 20 either during the first step (hence, according to the first alternative, only the request timer information 25 encircled by a dashed line as in Figure 2 is considered) or during the second step (hence, according to the second alternative, only the request timer information 25 encircled by a drawn-through line as in Figure 2 is considered); subsequently, the IMS conversational service is attempted to be initiated while the request timeout time interval 250 has not expired. According to a further embodiment of the present invention, the (identical) request timer information 25 is both transmitted during the first step and during the second step (i.e. both the request timer information 25 encircled by the dashed line and the one encircled by the drawn-through line are considered).

Once the request timer information 25 (corresponding to the request timeout time interval 250) is transmitted to the user equipment 20, the request timer information 25 is applied by the user equipment 20 while the user equipment 20 attempts to initiate the IMS conversational service, by means of sending the SIP invite message 220 to the network node 151 of the IMS network 150 (or to the telecommunications network 100; which is not shown). This applying the request timeout time interval 250 is represented, in Figure 2, by a rectangle, having drawn-through lines, comprising the SIP invite message 220 from the user equipment 20 to the network node 151 of the IMS network 150. After sending the SIP invite message 220, the request timeout time interval 250 is started (indicated by a vertical arrow on the left hand side of the rectangle representing the user equipment 20 attempting to initiate the IMS conversational service. Figure 2 exemplarily shows the situation of the attempt (of the user equipment 20) failing, being indicated by a crossed out return arrow being directed from the IMS network 150/network node 151 towards the user equipment 20. The attempt is aborted when the request timeout time interval 250 expires.

In both cases described above, the error situation (why the attempt of the user equipment 20 to initiate the IMS conversational service by means of the SIP invite message 210 fails) typically includes that there is no answer (to the SIP invite message 210) received in the user equipment 20, e.g. due to:
-- lack of coverage in LTE (Long Term Evolution) domain,
-- the P-CSCF (Proxy Call Serving Control Function) to which the UE is registered being down (e.g. due to hardware or power failure), transport layer to P-CSCF is down (router failure),
-- the transport layer to the P-CSCF being down (e.g. due to a router failure),
-- the physical (transport) layer to the P-CSCF being down (e.g. due to a problem in transmission).

## Claims

1. Method for improved handling of an Internet protocol, IP, Multimedia Subsystem, IMS,
conversational service of a user equipment (20) being connected to a telecommunications network (100) comprising or being associated to an IMS network (150),
wherein the user equipment (20) applies a request timer information (25), related to a request timeout time interval (250), when attempting to initiate the IMS conversational service, wherein the request timeout time interval (250) is started upon the initiation of the IMS conversational service, wherein the method comprises the following steps:
-- in a first step, the user equipment (20) attempts to Session Initiation Protocol, SIP, register towards the telecommunications network (100) or the IMS network (150),
-- in a second step, subsequent to the first step, the user equipment (20) attempts to initiate the IMS conversational service, and the request timer information (25), related to the request timeout time interval (250) to be applied by the user equipment (20) for the IMS conversational service, is transmitted, by the telecommunications network (100), to the user equipment (20) either during the first step and/or during the second step, wherein the IMS conversational service is attempted to be initiated while the request timeout time interval (250) has not expired,
the method **characterised in that**:
the request timeout time interval (250) related to the request timer information (25) is dependent on at least one out of the following:
-- the kind of radio service requested by the user equipment (20),
-- the kind of IMS conversational service.

2. Method according to claim 1, wherein - during the second step - the request timeout time interval (250) is started upon the user equipment (20) transmitting or attempting to transmit - in view of initiating the IMS conversational service - a SIP invite message (220) to a network node (151) of the IMS network (150) of the telecommunications network (100).

3. Method according to one of the preceding claims, wherein - during the first step - the user equipment (20) attempts to SIP register towards the telecommunications network (100) or the IMS network (150) by transmitting a SIP register message (210) to a network node (151) of the IMS network (150) of the telecommunications network (100).

4. Method according to one of the preceding claims, wherein the request timeout time interval (250) related to the request timer information (25) is dependent on at least one out of the following:
-- the radio access of the user equipment (20) towards the telecommunications network (100) when attempting to initiate the IMS conversational service,
-- the kind of interconnection scenario of the user equipment (20) towards the telecommunications network (100),
-- the capabilities of the user equipment (20).

5. Method according to one of the preceding claims, wherein the IMS conversational service corresponds to a voice call service or to a video call service or to a push-to-talk service or to an emergency call service.

6. System for improved handling of an Internet Protocol, IP, Multimedia Subsystem, IMS,
conversational service of a user equipment (20) being connected to a telecommunications network (100), wherein the system comprises the telecommunications network (100) and the user equipment (20), wherein the telecommunications network (100) comprises or is associated to an IMS network (150), wherein the user equipment (20) is configured to apply a request timeout time interval (250), related to a request timer information (25), when attempting to initiate the IMS conversational service, wherein the request timeout time interval (250) is started upon the initiation of the IMS conversational service, wherein the system is configured such that:
-- the user equipment (20) attempts to Session Intiation Protocol, SIP, register towards the telecommunications network (100) or the IMS network (150),
-- the user equipment (20) then attempts to initiate the IMS conversational service,
wherein the request timer information (25), related to the request timeout time interval (250) to be applied by the user equipment (20) for the IMS conversational service is configured to be transmitted, by the telecommunications network (100), to the user equipment (20) either during the attempt of the user equipment (20) to SIP register towards the telecommunications network (100) or the IMS network (150) or during the attempt of the user equipment (20) to initiate the IMS conversational service, wherein the system is configured such that the IMS conversational service is attempted to be initiated while the request timeout time interval (250) has not expired, the system being **characterised in that** the request timeout time interval (250) related to the request timer information (25) is dependent on at least one out of the following:
-- the kind of radio service requested by the user equipment (20),
-- the kind of IMS conversational service.

7. System according to claim 6, wherein the system is furthermore configured such that the request timeout time interval (250) is started upon the user equipment (20) transmitting or attempting to transmit - in view of initiating the IMS conversational service - a SIP invite message (220) to a network node (151) of the IMS network (150) of the telecommunications network (100).

8. System according to claim 6 or 7, wherein the user equipment (20) attempts to SIP register towards the telecommunications network (100) or the IMS network (150) by transmitting a SIP register message (210) to a network node (151) of the IMS network (150) of the telecommunications network (100).

9. System according to one of claim 6 to 8, wherein the request timeout time interval (250) related to the request timer information (25) is dependent on at least one out of the following:
-- the radio access of the user equipment (20) towards the telecommunications network (100) when attempting to initiate the IMS conversational service,
-- the kind of interconnection scenario of the user equipment (20) towards the telecommunications network (100),
-- the capabilities of the user equipment (20).

10. Program comprising a computer readable program code which, when executed on a computer or on a network node of a telecommunications network (100) or on a user equipment (20) or in part on the network node of a telecommunications network (100) and in part on the user equipment (20), causes the computer or the network node of the telecommunications network (100) or the user equipment (20) to perform a method according one of claims 1 to 5.

11. Computer readable storage medium for improved handling of an Internet Protocol, IP, Multimedia Subsystem, IMS, conversational service of a user equipment (20) being connected to a telecommunications network (100) comprising or being associated to an IMS network (150), the storage medium comprising a computer program stored on the storage medium, the computer program comprising program code which, when executed on a computer or on a network node of the telecommunications network (100) or on a user equipment (20) or in part on the network node of the telecommunications network (100) and in part on the user equipment (20), causes the computer or the network node of the telecommunications network (100) or the user equipment (20) to perform a method according one of claims 1 to 5.

## Patentansprüche

1. Verfahren zur verbesserten Handhabung eines Internet Protocol (IP) Multimedia Subsystem (Internet Multimedia Subsystem, IMS)-Gesprächsdienstes einer Benutzerausrüstung (20), die mit einem Telekommunikationsnetz (100) verbunden ist, das ein IMS-Netz (150) umfasst oder mit einem IMS-Netz (150) verknüpft ist,
wobei die Benutzerausrüstung (20) eine Anforderungs-Timer-Information (25) anwendet, die zu einem Anforderungs-Timeout-Zeitintervall (250) in Beziehung steht, wenn versucht wird, den IMS-Gesprächsdienst zu initiieren, wobei das Anforderungs-Timeout-Zeitintervall (250) bei der Initiierung des IMS-Gesprächsdienstes gestartet wird, wobei das Verfahren die folgenden Schritte umfasst:
- in einem ersten Schritt versucht die Benutzerausrüstung (20), sich über das Session Initiation Protocol (SIP) bei dem Telekommunikationsnetz (100) oder dem IMS-Netz (150) zu registrieren,
- in einem zweiten Schritt, im Anschluss an den ersten Schritt, versucht die Benutzerausrüstung (20), den IMS-Gesprächsdienst zu initiieren, und
die Anforderungs-Timer-Information (25), die zu dem Anforderungs-Timeout-Zeitintervall (250) in Beziehung steht, das durch die Benutzereinrichtung (20) für den IMS-Gesprächsdienst anzuwenden ist, wird durch das Telekommunikationsnetz (100) entweder während des ersten Schritts und/oder während des zweiten Schritts an die Benutzereinrichtung (20) gesendet, wobei versucht wird, den IMS-Gesprächsdienst zu initiieren, solange das Anforderungs-Timeout-Zeitintervall (250) noch nicht abgelaufen ist,
wobei das Verfahren **dadurch gekennzeichnet ist, dass**:
das Anforderungs-Timeout-Zeitintervall (250), das zu der Anforderungs-Timer-Information (25) in Beziehung steht, von mindestens einem von Folgendem abhängig ist:
- der Art des durch die Benutzerausrüstung (20) angeforderten Funkdienstes,
- der Art des IMS-Gesprächsdienstes.

2. Verfahren nach Anspruch 1, wobei - während des zweiten Schritts - das Anforderungs-Timeout-Zeitintervall (250) gestartet wird, sobald die Benutzerausrüstung (20) eine SIP-Aufforderungsnachricht (220) an einen Netzknoten (151) des IMS-Netzes (150) des Telekommunikationsnetzes (100) - im Hinblick auf das Initiieren des IMS-Gesprächsdienstes - sendet oder zu senden versucht.

3. Verfahren nach einem der vorangehenden Ansprüche, wobei - während des ersten Schrittes - die Benutzerausrüstung (20) versucht, sich durch Senden einer SIP-Registrierungsnachricht (210) an einen Netzknoten (151) des IMS-Netzes (150) des Telekommunikationsnetzes (100) über SIP bei dem Telekommunikationsnetz (100) oder dem IMS-Netz (150) zu registrieren.

4. Verfahren nach einem der vorangehenden Ansprüche, wobei das Anforderungs-Timeout-Zeitintervall (250), das zu der Anforderungs-Timer-Information (25) in Beziehung steht, von mindestens einem von Folgendem abhängig ist:
- dem Funkzugang der Benutzerausrüstung (20) zu dem Telekommunikationsnetz (100) bei dem Versuch, den IMS-Gesprächsdienst zu initiieren,
- der Art des Zusammenschaltungsszenarios der Benutzerausrüstung (20) mit dem Telekommunikationsnetz (100),
- den Fähigkeiten der Benutzerausrüstung (20).

5. Verfahren nach einem der vorangehenden Ansprüche, wobei der IMS-Gesprächsdienst einem Sprachrufdienst oder einem Videorufdienst oder einem Push-to-Talk-Dienst oder einem Notrufdienst entspricht.

6. System zur verbesserten Handhabung eines Internet Protocol (IP) Multimedia Subsystem (Internet Multimedia Subsystem, IMS)-Gesprächsdienstes einer Benutzerausrüstung (20), die mit einem Telekommunikationsnetz (100) verbunden ist, wobei das System das Telekommunikationsnetz (100) und die Benutzerausrüstung (20) umfasst, wobei das Telekommunikationsnetz (100) ein IMS-Netz (150) umfasst oder mit einem IMS-Netz (150) verknüpft ist, wobei die Benutzerausrüstung (20) so konfiguriert ist, dass es ein Anforderungs-Timeout-Zeitintervall (250), das zu einer Anforderungs-Timer-Information (25) in Beziehung steht, anwendet, wenn versucht wird, den IMS-Gesprächsdienst zu initiieren, wobei das Anforderungs-Timeout-Zeitintervall (250) bei der Initiierung des IMS-Gesprächsdienstes gestartet wird, wobei das System so konfiguriert ist, dass:
- die Benutzerausrüstung (20) versucht, sich über das Session Initiation Protocol (SIP) bei dem Telekommunikationsnetz (100) oder dem IMS-Netz (150) zu registrieren,
- die Benutzereinrichtung (20) dann versucht, den IMS-Gesprächsdienst zu initiieren, wobei
die Anforderungs-Timer-Information (25), die zu dem Anforderungs-Timeout-Zeitintervall (250) in Beziehung steht, das durch die Benutzereinrichtung (20) für den IMS-Gesprächsdienst anzuwenden ist, dafür konfiguriert ist, durch das Telekommunikationsnetz (100) entweder während des Versuchs der Benutzereinrichtung (20), sich über SIP bei dem Telekommunikationsnetz (100) oder dem IMS-Netz (150) zu registrieren, oder während des Versuchs der Benutzereinrichtung (20), den IMS-Gesprächsdienst zu initiieren, an die Benutzereinrichtung (20) gesendet zu werden, wobei das System so konfiguriert ist, dass versucht wird, den IMS-Gesprächsdienst zu initiieren, während das Anforderungs-Timeout-Zeitintervall (250) noch nicht abgelaufen ist,
wobei das System **dadurch gekennzeichnet ist, dass** das Anforderungs-Timeout-Zeitintervall (250), das zu der Anforderungs-Timer-Information (25) in Beziehung steht, von mindestens einem von Folgendem abhängig ist:
- der Art des durch die Benutzerausrüstung (20) angeforderten Funkdienstes,
- der Art des IMS-Gesprächsdienstes.

7. System nach Anspruch 6, wobei das System des Weiteren so konfiguriert ist, dass das Anforderungs-Timeout-Zeitintervall (250) gestartet wird, sobald die Benutzerausrüstung (20) eine SIP-Aufforderungsnachricht (220) an einen Netzknoten (151) des IMS-Netzes (150) des Telekommunikationsnetzes (100) - im Hinblick auf das Initiieren des IMS-Gesprächsdienstes - sendet oder zu senden versucht.

8. System nach Anspruch 6 oder 7, wobei die Benutzerausrüstung (20) versucht, sich über SIP bei dem Telekommunikationsnetz (100) oder dem IMS-Netz (150) zu registrieren, indem es eine SIP-Registrierungsnachricht (210) an einen Netzknoten (151) des IMS-Netzes (150) des Telekommunikationsnetzes (100) sendet.

9. System nach einem der Ansprüche 6 bis 8, wobei das Anforderungs-Timeout-Zeitintervall (250), das zu der Anforderungs-Timer-Information (25) in Beziehung steht, von mindestens einem von Folgendem abhängig ist:
- dem Funkzugang der Benutzerausrüstung (20) zu dem Telekommunikationsnetz (100) bei dem Versuch, den IMS-Gesprächsdienst zu initiieren,
- der Art des Zusammenschaltungsszenarios der Benutzerausrüstung (20) mit dem Telekommunikationsnetz (100),
- den Fähigkeiten der Benutzerausrüstung (20).

10. Programm, umfassend einen computerlesbaren Programmcode, der, wenn er auf einem Computer oder in einem Netzknoten eines Telekommunikationsnetzes (100) oder in einer Benutzerausrüstung (20) oder teilweise in dem Netzknoten eines Telekommunikationsnetzes (100) und teilweise in der Benutzerausrüstung (20) ausgeführt wird, den Computer oder den Netzknoten des Telekommunikationsnetzes (100) oder die Benutzerausrüstung (20) veranlasst, ein Verfahren nach einem der Ansprüche 1 bis 5 durchzuführen.

11. Computerlesbares Speichermedium zur verbesserten Handhabung eines Internet Protocol (IP) Multimedia Subsystem (Internet Multimedia Subsystem, IMS)-Gesprächsdienstes einer Benutzerausrüstung (20), die mit einem Telekommunikationsnetz (100) verbunden ist, das ein IMS-Netz (150) umfasst oder mit einem IMS-Netz (150) verknüpft ist, wobei das Speichermedium ein auf dem Speichermedium gespeichertes Computerprogramm umfasst, wobei das Computerprogramm Programmcode umfasst, der, wenn er auf einem Computer oder in einem Netzknoten des Telekommunikationsnetzes (100) oder in einer Benutzerausrüstung (20) oder teilweise in dem Netzknoten des Telekommunikationsnetzes (100) und teilweise in der Benutzerausrüstung (20) ausgeführt wird, den Computer oder den Netzknoten des Telekommunikationsnetzes (100) oder die Benutzerausrüstung (20) veranlasst, ein Verfahren nach einem der Ansprüche 1 bis 5 durchzuführen.

## Revendications

1. Procédé permettant d'améliorer le traitement d'un service conversationnel de sous-système multimédia à protocole Internet (Internet Protocol, IP) (Internet Multimedia Subsystem, IMS) d'un équipement utilisateur (20) connecté à un réseau de télécommunications (100) comprenant ou associé à un réseau IMS (150),
dans lequel l'équipement utilisateur (20) applique une information de temporisation de demande (25), liée à un intervalle de temps de temporisation de demande (250), lors d'une tentative d'initiation du service conversationnel IMS, dans lequel l'intervalle de temps de temporisation de demande (250) est démarré lors de l'initiation du service conversationnel IMS, dans lequel le procédé comprend les étapes suivantes :
- dans une première étape, l'équipement utilisateur (20) tente de s'enregistrer par le protocole d'initiation de session (Session Initiation Protocol, SIP) auprès du réseau de télécommunications (100) ou du réseau IMS (150),
- dans une seconde étape, consécutive à la première étape, l'équipement utilisateur (20) tente d'initier le service conversationnel IMS, et l'information de temporisation de demande (25), liée à l'intervalle de temps de temporisation de demande (250) à appliquer par l'équipement utilisateur (20) pour le service conversationnel IMS, est transmise, par le réseau de télécommunications (100), à l'équipement utilisateur (20) au cours de la première étape et/ou au cours de la seconde étape, dans lequel l'initiation du service conversationnel IMS est tentée tandis que l'intervalle de temps de temporisation de demande (250) n'a pas expiré,
le procédé étant **caractérisé en ce que** :
l'intervalle de temps de temporisation de demande (250) lié à l'information de temporisation de demande (25) dépend d'au moins l'un des éléments suivants :
- le type de service radio demandé par l'équipement utilisateur (20),
- le type de service conversationnel IMS.

2. Procédé selon la revendication 1, dans lequel - au cours de la seconde étape - l'intervalle de temps de temporisation de demande (250) est démarré lorsque l'équipement utilisateur (20) transmet ou tente de transmettre - en vue d'initier le service conversationnel IMS - un message d'invitation SIP (220) à un noeud de réseau (151) du réseau IMS (150) du réseau de télécommunications (100).

3. Procédé selon l'une des revendications précédentes, dans lequel - lors de la première étape - l'équipement utilisateur (20) tente de s'enregistrer par SIP auprès du réseau de télécommunications (100) ou du réseau IMS (150) en transmettant un message d'enregistrement SIP (210) à un noeud de réseau (151) du réseau IMS (150) du réseau de télécommunications (100).

4. Procédé selon l'une des revendications précédentes, dans lequel l'intervalle de temps de temporisation de demande (250) lié à l'information de temporisation de demande (25) dépend d'au moins l'un des éléments suivants :
- l'accès radio de l'équipement utilisateur (20) au réseau de télécommunications (100) lors d'une tentative d'initiation du service conversationnel IMS,
- le type de scénario d'interconnexion de l'équipement utilisateur (20) au réseau de télécommunications (100),
- les capacités de l'équipement utilisateur (20).

5. Procédé selon l'une des revendications précédentes, dans lequel le service conversationnel IMS correspond à un service d'appel vocal ou à un service d'appel vidéo ou à un service de messagerie vocale instantanée ou à un service d'appel d'urgence.

6. Système permettant une gestion améliorée d'un service conversationnel de sous-système multimédia à protocole Internet (Internet Protocol, IP) (Internet Multimedia Subsystem, IMS) d'un équipement utilisateur (20) connecté à un réseau de télécommunications (100), dans lequel le système comprend le réseau de télécommunications (100) et l'équipement utilisateur (20), dans lequel le réseau de télécommunications (100) comprend ou est associé à un réseau IMS (150), dans lequel l'équipement utilisateur (20) est configuré pour appliquer un intervalle de temps de temporisation de demande (250), lié à une information de temporisation de demande (25), lors d'une tentative d'initialisation du service conversationnel IMS, dans lequel l'intervalle de temps de temporisation de demande (250) est démarré lors de l'initiation du service conversationnel IMS, dans lequel le système est configuré de telle sorte que :
- l'équipement utilisateur (20) tente de s'enregistrer par le protocole d'initiation de session (Session Initiation Protocol, SIP) auprès du réseau de télécommunications (100) ou du réseau IMS (150),
- l'équipement utilisateur (20) tente alors d'initier le service conversationnel IMS,
dans lequel l'information de temporisation de demande (25), liée à l'intervalle de temps de temporisation de demande (250) à appliquer par l'équipement utilisateur (20) pour le service conversationnel IMS est configurée pour être transmise, par le réseau de télécommunications (100), à l'équipement utilisateur (20) soit lors de la tentative de l'équipement utilisateur (20) de s'enregistrer par SIP auprès du réseau de télécommunications (100) ou du réseau IMS (150), soit lors de la tentative de l'équipement utilisateur (20) d'initier le service conversationnel IMS, dans lequel le système est configuré de sorte que l'initiation du service conversationnel IMS est tentée tandis que l'intervalle de temps de temporisation de demande (250) n'a pas expiré,
le système étant **caractérisé en ce que** l'intervalle de temps de temporisation de demande (250) lié à l'information de temporisation de demande (25) dépend d'au moins l'un des éléments suivants :
- le type de service radio demandé par l'équipement utilisateur (20),
- le type de service conversationnel IMS.

7. Système selon la revendication 6, dans lequel le système est en outre configuré de telle sorte que l'intervalle de temps de temporisation de demande (250) est démarré lorsque l'équipement utilisateur (20) transmet ou tente de transmettre - en vue d'initier le service conversationnel IMS - un message d'invitation SIP (220) à un noeud de réseau (151) du réseau IMS (150) du réseau de télécommunications (100) .

8. Système selon la revendication 6 ou 7, dans lequel l'équipement utilisateur (20) tente de s'enregistrer par SIP auprès du réseau de télécommunications (100) ou du réseau IMS (150) en transmettant un message d'enregistrement SIP (210) à un noeud de réseau (151) du réseau IMS (150) du réseau de télécommunications (100).

9. Système selon l'une des revendications 6 à 8, dans lequel l'intervalle de temps de temporisation de demande (250) lié à l'information de temporisation de demande (25) dépend d'au moins l'un des éléments suivants :
- l'accès radio de l'équipement utilisateur (20) au réseau de télécommunications (100) lors d'une tentative d'initiation du service conversationnel IMS,
- le type de scénario d'interconnexion de l'équipement utilisateur (20) au réseau de télécommunication (100),
- les capacités de l'équipement utilisateur (20).

10. Programme comprenant un code de programme lisible par ordinateur qui, lorsqu'il est exécuté sur un ordinateur ou sur un noeud de réseau d'un réseau de télécommunications (100) ou sur un équipement utilisateur (20) ou en partie sur le noeud de réseau d'un réseau de télécommunications (100) et en partie sur l'équipement utilisateur (20), amène l'ordinateur ou le noeud de réseau du réseau de télécommunications (100) ou l'équipement utilisateur (20) à exécuter un procédé selon l'une des revendications 1 à 5.

11. Support de stockage lisible par ordinateur pour une gestion améliorée d'un service conversationnel de sous-système multimédia à protocole Internet (Internet Protocol, IP) (Internet Multimedia Subsystem, IMS) d'un équipement utilisateur (20) connecté à un réseau de télécommunications (100) comprenant ou étant associé à un réseau IMS (150), le support de stockage comprenant un programme informatique stocké sur le support de stockage, le programme informatique comprenant un code de programme qui, lorsqu'il est exécuté sur un ordinateur ou sur un noeud de réseau du réseau de télécommunications (100) ou sur un équipement utilisateur (20) ou en partie sur le noeud de réseau du réseau de télécommunications (100) et en partie sur l'équipement utilisateur (20), amène l'ordinateur ou le noeud de réseau du réseau de télécommunications (100) ou l'équipement utilisateur (20) à exécuter un procédé selon l'une des revendications 1 à 5.
